# EUROPÄISCHE PATENTSCHRIFT

(11) **EP 2 433 003 B1**
(45) Veröffentlichungstag und Bekanntmachung des Hinweises auf die Patenterteilung: **03.09.2014**
(21) Anmeldenummer: 10710313.7
(22) Anmeldetag: 23.03.2010
(51) Int. Cl.: F04B 17/03

(54) **PUMPENGEHÄUSE EINES KRAFTFAHRZEUG-HYDROAGGREGATS**
PUMP HOUSING FOR A HYDRAULIC UNIT IN A MOTOR VEHICLE
CARTER DE POMPE D'UNE UNITÉ HYDRAULIQUE POUR VÉHICULE À MOTEUR

(30) Priorität: 22.05.2009 DE 102009026417
(43) Veröffentlichungstag der Anmeldung: 28.03.2012
(73) Patentinhaber: Robert Bosch GmbH, 70442 Stuttgart (DE)
(72) Erfinder: MAYR, Matthias, 87549 Rettenberg (DE); MICKE, Marc, 74391 Erligheim (DE); FELLMETH, Reiner, 74354 Besigheim (DE); BAREISS, Alexander, 87509 Immenstadt (DE); WEH, Andreas, 87477 Sulzberg (DE)
(86) Internationale Anmeldenummer: PCT/EP2010/053739
(87) Internationale Veröffentlichungsnummer: WO 2010/133390

(56) Entgegenhaltungen:
- EP-A1- 0 562 216
- EP-A1- 0 866 224
- EP-A1- 1 682 777
- WO-A1-98/33611
- DE-A1-102007 052 748
- US-A- 5 173 039

## Beschreibung

Die Erfindung betrifft ein Verfahren zum Herstellen eines Pumpengehäuses eines Kraftfahrzeug-Hydroaggregats.

### Stand der Technik

Hydroaggregate werden bei Kraftfahrzeugen, wie beispielsweise Personenkraftwagen oder Lastkraftwagen verwendet, um an deren Bremssystem geregelte Bremsdrücke bereitzustellen. Insbesondere werden mit derartigen Hydroaggregaten Funktionen eines Antiblockiersystems (ABS), einer Antischlupfregelung (ASR) und/oder eines elektronischen Stabilitätsprogramms (ESP) realisiert. Die Hydroaggregate weisen zum Dosieren der Bremsdrücke in der Regel eine Pumpe mit mehreren Pumpkolben und einem zugehörigen Motor sowie eine Vielzahl Ventile auf. Die Ventile sind in der Regel elektromagnetisch gesteuert und ermöglichen es so, an einzelnen Bremsen oder Bremskreisen unterschiedliche Bremsdrücke bereitzustellen.

Aus US-A-5173039 ist eine zweifach wirkende Einzelkolben-Pumpe bekannt, bei der ein Motor an zwei Kopfelementen angebracht ist. Das einzelne Kopfelement hat dabei eine flache Oberfläche, an der der Motor anliegt. Jedes der Kopfelemente umfasst einen Block, der mittels Extrudieren aus Aluminium hergestellt ist. Dabei resultieren die flachen Oberflächen von einem Schneiden von Scheiben von dem extrudierten Material. Das Schneiden der Scheiben soll dabei beispielsweise ein Sägen, Fräsen oder Schleifen beinhalten.

Aus WO 2005/042975 A1 bzw. EP 1 682 777 A1 ist eine Anschlussplatte einer hydraulischen Maschine bekannt, die aus einem zuvor hergestellten Strangprofil zu Anschlussplatten-Rohlingen abgelängt und weiterverarbeitet wurde. Für das Ablängen werden die Fertigungsverfahren Laserschneiden, Wasserstrahlschneiden oder ein Ausbrennverfahren genannt. Dabei wird nur die Kontur des Anschlussplatten-Rohlings nicht mehr nachbearbeitet. Es ist eine Aufgabe der Erfindung ein Pumpengehäuse eines Kraftfahrzeug-Hydroaggregats zu schaffen, welches im Vergleich zu bekannten Pumpengehäuses kostengünstiger herstellbar ist.

### Offenbarung der Erfindung

Die Aufgabe ist mit einem Verfahren zum Herstellen eines Pumpengehäuses gemäß Anspruch 1 gelöst. Vorteilhafte Weiterbildungen sind in dem abhängigen Anspruch 2 beschrieben.

Erfindungsgemäß wird ein Pumpengehäuse eines Kraftfahrzeug-Hydroaggregats hergestellt, das mit einem insbesondere massiven Körper gestaltet ist, in dem sich Öffnungen zum Aufnehmen von Komponenten einer zugehörigen Pumpe befinden und der an einer seiner Außenflächen zum Anbringen eines Motors der zugehörigen Pumpe angepasst ist, wobei das Pumpengehäuse dadurch gekennzeichnet ist, dass die Außenfläche zum Anbringen des Motors nicht mit einem spanabhebenden Verfahren bearbeitet worden ist.

Bei bekannten Pumpengehäusen von Kraftfahrzeug-Hydroaggregaten ist die Außenfläche, welche zum Anbringen des zugehörigen Motors vorgesehen ist, stets mit einem spanabhebenden Fertigungsverfahren bearbeitet. Es wird bei bekannten Pumpengehäusen auf diese Weise eine Referenzfläche gestaltet, an der der Motor angebracht wird, die aber zugleich auch Referenzfläche für die Bearbeitung der Öffnungen im Pumpengehäuse ist. In diesen Öffnungen werden nachfolgend hydraulische Komponenten der zugehörigen Pumpe angeordnet. Solche Komponenten sind wenigstens zwei Pumpenkolben, die in dem Pumpengehäuse verschiebbar gelagert werden und zum Pumpen des zugehörigen Hydraulikfluids in dem Pumpengehäuse dienen. Die Pumpenkolben werden dabei von einem Exzenter angetrieben, der sich auf der Antriebswelle des zugehörigen Motors befindet. Durch die genannte Referenzfläche, die bei bekannten Pumpengehäusen wie oben erläutert speziell durch ein spanabhebendes Fertigungsverfahren, wie z.B. Fräsen, ausgebildet wird, wird es möglich eine definierte bzw. genaue räumliche Zuordnung zwischen diesen Pumpenkolben und dem Exzenter zu schaffen. Erst dadurch ist die ordnungsgemäße Funktion der Pumpe bekannter Hydroaggregate gesichert.

Bei der erfindungsgemäßen Lösung ist auf eine solche, durch spanabhebende Bearbeitung hergestellte Referenzfläche gezielt verzichtet worden. Erfindungsgemäß wird ein Rohling eines Pumpengehäuses in einer zugehörigen Vorrichtung derart eingespannt, dass die Außenfläche des Rohlings gegen einen Anschlag gepresst und dort während der Bearbeitung und insbesondere der Ausformung der Öffnungen zum Aufnehmen von Komponenten der zugehörigen Pumpe ortsfest gehalten ist. Dadurch kann das Pumpengehäuse als Rohling kleiner sowie leichter sein, und damit auch kostengünstiger dargestellt werden. Ferner entfällt eine Bearbeitungsoperation, insbesondere eine Fräsoperation, an einer Außenfläche des Rohlings, wodurch der Herstellungsaufwand reduziert wird, die zugehörigen Kosten sinken und die Wertschöpfung erhöht werden kann. Ferner entfallen auch Sekundärmaßnahmen, wie beispielsweise ein Entgraten einer Außenfläche.

Es kann auf diese Weise ohne eine spanabhebende Bearbeitung an der dem Motor zugeordneten Außenfläche des Pumpengehäuses eine Schnittstelle für den Motor dargestellt werden. Diese Schnittstelle ist übergreifend zwischen dem zerspanten Bereich und dem nicht bearbeiteten Bereich an der Außenfläche (Anschlag für einen Flansch des Motors). Die Vorspannkrafttoleranz des Motors, die durch die Wegtoleranz beim Bearbeiten des Pumpengehäuses an der Vorrichtung beeinflusst wird, kann dabei erfindungsgemäß auf einen erforderlichen Wert bzw. akzeptablen Bereich eingeschränkt werden.

Die axiale Toleranz zwischen zerspanter Kontur bzw. dem zerspanten Bereich im Inneren des Rohlings und der Rohlingsoberfläche wird erfindungsgemäß auf die Toleranz des Verfahrweges der zugehörigen, spanabhebenden Fertigungsanlage (in der Regel eine NC-Achse einer Fräsmaschine) reduziert.

Bei einer vorteilhaften Weiterbildung wird das Pumpengehäuse beim Ausbilden der Öffnungen zum Aufnehmen von hydraulischen Komponenten der zugehörigen Pumpe an der Außenfläche zum Anbringen des Motors gegen einen Anschlag einer das Pumpengehäuse haltenden Vorrichtung gepresst worden. Mit dem derartigen Anpressen wird eine ortsfeste Positionierung des Pumpengehäuses während der spanenden Fertigung erreicht, die eine maßgenaue Zerspanung unter gleichzeitiger Einhaltung der geforderten Toleranzen zwischen dem Inneren des Pumpengehäuses und der Außenfläche zum Anbringen des Motors bzw. dem zerspanten (bearbeiteten) und dem nicht zerspanten Bereich ermöglicht.

Gemäß der erfindungsgemäßen Lösung wird eine Vorrichtung zum Halten eines Pumpengehäuses eines Kraftfahrzeug-Hydroaggregats während dessen spanabhebender Bearbeitung zum Ausbilden von Öffnungen zum Aufnehmen von Komponenten der zugehörigen Pumpe verwendet, bei der ein Anschlag zum Anlegen des rohen Pumpengehäuses mit jener seiner Außenflächen vorgesehen ist, die nachfolgend die Außenfläche zum Anbringen eines Motors der zugehörigen Pumpe am Pumpengehäuse ist. Die Vorrichtung ermöglicht es also wie oben bereits erläutert, die unbearbeitete Außenfläche zum Anbringen des Motors auch während der spanabhebenden Fertigung als Referenzfläche zu nutzen. Die Vorrichtung ist dazu bevorzugt mit mehreren, relativ kleinen, räumlich begrenzten Anschlagflächen versehen, die insbesondere an oder in der Nähe der Ecken der genannten Außenfläche zum Anliegen kommen.

Gemäß der erfindungsgemäßen Lösung ist ein Verfahren zum Herstellen eines Pumpengehäuses eines Kraftfahrzeug-Hydroaggregats mit folgenden Schritten geschaffen: Erstens Anlegen des rohen, nicht spanabhebend bearbeiteten Pumpengehäuses mit einer seiner Außenflächen an einem Anschlag sowie zweitens Ausbilden durch spanabhebende Bearbeitung von Öffnungen zum Aufnehmen von Komponenten einer zugehörigen Pumpe an der genannten Außenfläche und an weiteren Außenflächen des Pumpengehäuses, wobei an der genannten Außenfläche unter anderem eine Öffnung zum Aufnehmen eines Teils eines Motors der zugehörigen Pumpe ausgebildet wird.

Das erfindungsgemäße Verfahren ist ferner vorteilhaft durch den folgenden Schritt weitergebildet: Spannen des Pumpengehäuses gegen die genannte Außenfläche mit einer Kraft, die größer ist, als die beim spanabhebenden Bearbeiten am Pumpengehäuse wirkenden Kräfte. Die derartige Spannkraft stellt sicher, dass das Pumpengehäuse während der Bearbeitung an der zugehörigen Vorrichtung in jedem Fall ortsfest gehaltert ist. Alternativ ist es auch möglich das Pumpengehäuse formschlüssig in der Vorrichtung zu verriegeln.

### Kurze Beschreibung der Zeichnungen

Nachfolgend werden Ausführungsbeispiele der erfindungsgemäßen Lösung anhand der beigefügten schematischen Zeichnungen näher erläutert. Es zeigt:
Fig. 1 eine perspektivische Ansicht einer Vorrichtung zum Halten eines Pumpengehäuses eines Kraftfahrzeug-Hydroaggregats gemäß der Erfindung,
Fig. 2 eine Seitenansicht der Vorrichtung gemäß Fig. 1,
Fig. 3 eine Draufsicht der Vorrichtung gemäß Fig. 1 und
Fig. 4 eine perspektivische Ansicht eines gläsernen Modells eines ABS-Pumpengehäuses gemäß dem Stand der Technik und gemäß der Erfindung.

### Ausführungsformen der Erfindung

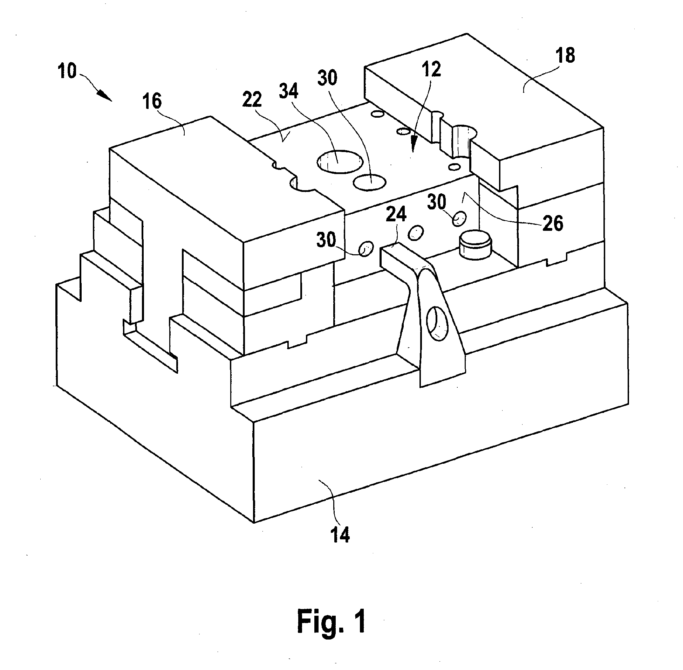

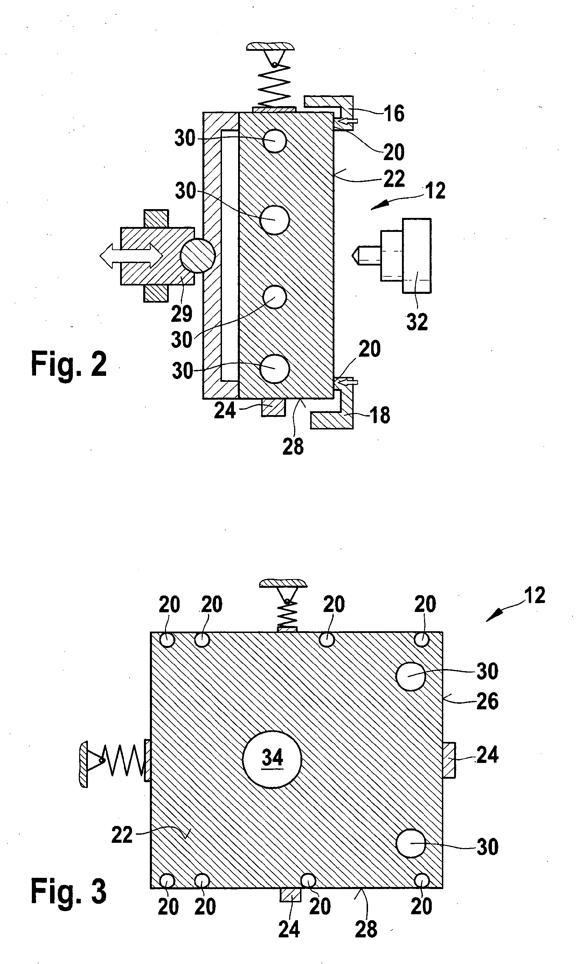

In Fig. 1 ist eine Vorrichtung 10 zum Halten eines aus einem Aluminiumblock gebildeten, quaderförmigen Pumpengehäuses 12 eines weiter nicht dargestellten Kraftfahrzeug-Hydroaggregats dargestellt. Die Vorrichtung 10 ist mit einer Grundplatte 14 gestaltet, von der zwei Klemmbacken 16 und 18 bezogen auf die Fig. nach oben abstehen. Die Klemmbacken 16 und 18 sind an der Grundplatte 14 ortsfest angebracht. Die Klemmbacken 16 und 18 weisen dazu je zwei Anschläge bzw. Anschlagflächen 20 auf, an denen das Pumpengehäuse 12 von unten gegen die jeweilige Klemmbacke 16 bzw. 18 anliegt. Dabei sind die in Fig. 3 dargestellten inneren vier Anschlagflächen 20 für ABS-Pumpengehäuse (siehe auch Fig. 5) vorgesehen, während die in Fig. 3 dargestellten äußeren vier Anschlagflächen 20 für ESP-Pumpengehäuse (siehe auch Fig. 7) gedacht sind. Die Anschlagflächen 20 sind vorliegend als kreisrunde Flächen gestaltet (siehe Fig. 3), können bei anderen Ausführungsformen aber auch andere geometrische Grundformen sowie andere Anzahlen einnehmen.

Das Pumpengehäuse 12 liegt an den Anschlagflächen 20 mit einer im Wesentlichen ebenen, rohen Außenfläche 22 an, die nachfolgend zum Anbringen eines (nicht dargestellten) Motors des Kraftfahrzeug-Hydroaggregats dient.

An der Grundplatte 14 sind ferner zwei Anschläge 24 vorgesehen, gegen die das quaderförmige Pumpengehäuse 12 mit einer Seitenfläche 26 sowie einer Seitenfläche 28 anliegt. Das Pumpengehäuse 12 ist dabei von unten mittels eines hydraulischen oder pneumatischen Stempels 29 und von der Seite gegen die jeweiligen Anschläge bzw. Anschlagflächen gedrängt.

An dem derart gehalterten Pumpengehäuse 12 werden in einem spanabhebenden Fertigungsverfahren diverse Öffnungen 30 zum Aufnehmen von Komponenten einer zugehörigen Pumpe ausgeformt. Als Komponenten werden nachfolgend beispielsweise (nicht dargestellte) Pumpenkolben und gegebenenfalls (nicht dargestellte) Ventile in die Öffnungen 30 eingesetzt. An der Außenfläche 22 wird dabei insbesondere mit einem Werkzeug 32 eine Öffnung 34 eingebohrt, die nachfolgend zum Aufnehmen eines (nicht dargestellten) Lagers sowie eines (nicht dargestellten) Exzenters des Motors dient. Die Außenfläche 22 selbst bleibt hingegen roh und wird nicht überfräst.

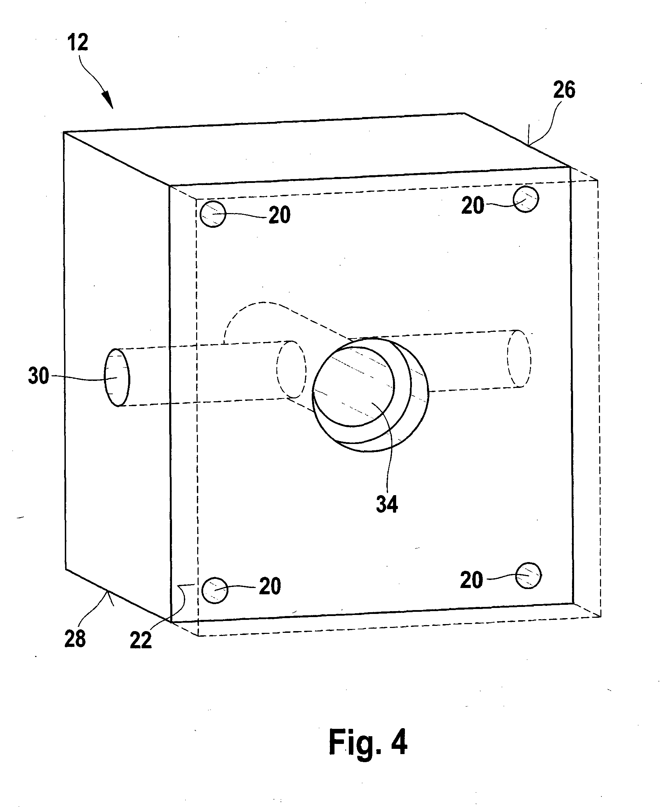

In Fig. 4 ist veranschaulicht, dass mittels der Vorrichtung 10 und dem zugehörigen spanabhebenden Fertigungsverfahren für die Öffnungen 30 im Vergleich zu bekannten Vorgehensweisen für das Pumpengehäuse 12 ein kleinerer Rohling verwendet werden kann.

## Patentansprüche

1. Verfahren zum Herstellen eines Pumpengehäuses (12) eines Kraftfahrzeug-Hydroaggregats mit den Schritten:
- Anlegen des rohen, nicht spanabhebend bearbeiteten Pumpengehäuses (12) mit einer seiner rohen Außenflächen (22) an einem Anschlag (20),
- Ausbilden durch spanabhebende Bearbeitung von Öffnungen (30, 34) zum Aufnehmen von Komponenten einer zugehörigen Pumpe an der genannten Außenfläche (22) und an weiteren Außenflächen (26, 28) des Pumpengehäuses (12), wobei an der genannten Außenfläche (22) eine Öffnung (34) zum Aufnehmen eines Teils eines Motors ausgebildet wird, wobei die genannte Außenfläche (22) roh bleibt und nicht mit einem spanabhebenden Verfahren bearbeitet wird.

2. Verfahren nach Anspruch 1,
**gekennzeichnet durch** den Schritt: Spannen des Pumpengehäuses (12) gegen die genannte Außenfläche (22) mit einer Kraft, die größer ist, als die beim spanabhebenden Bearbeiten am Pumpengehäuse (12) wirkenden Kräfte.

## Claims

1. Method for producing a pump housing (12) for a hydraulic unit in a motor vehicle, having the steps:
- laying in place the untreated pump housing (12), not machined by cutting, with one of its untreated outer faces (22), against a stop (20),
- formation, by cutting machining, of orifices (30, 34) for the reception of components of an associated pump on said outer face (22) and on further outer faces (26, 28) of the pump housing (12), an orifice (34) for the reception of part of a motor being formed on said outer face (22), the said outer face (22) remaining untreated and not being machined by means of a cutting method.

2. Method according to Claim 1, **characterized by** the step: tensioning of the pump housing (12) against said outer face (22) with a force that is greater than the forces acting on the pump housing (12) during cutting machining.

## Revendications

1. Procédé de fabrication d'un carter de pompe (12) d'un groupe hydraulique de véhicule automobile comprenant les étapes suivantes :
- application du carter de pompe brut (12) usiné sans enlèvement de copeaux, par l'une de ses surfaces extérieures brutes (22), contre une butée (20),
- réalisation d'ouvertures (30, 34) par usinage par enlèvement de copeaux afin de recevoir des composants d'une pompe associée au niveau de ladite surface extérieure (22) et au niveau d'autres surfaces extérieures (26, 28) du carter de pompe (12), une ouverture (34) étant réalisée au niveau de ladite surface extérieure (22) pour recevoir une partie d'un moteur, ladite surface extérieure (22) restant brute et n'étant pas usinée par un procédé d'enlèvement de copeaux.

2. Procédé selon la revendication 1,
**caractérisé par** l'étape de serrage du carter de pompe (12) contre ladite surface extérieure (22) avec une force supérieure aux forces agissant sur le carter de pompe (12) lors de l'usinage par enlèvement de copeaux.
